# EUROPÄISCHE PATENTSCHRIFT

(11) **EP 0 388 775 B1**
(45) Veröffentlichungstag und Bekanntmachung des Hinweises auf die Patenterteilung: **16.02.1994**
(21) Anmeldenummer: 90104799.3
(22) Anmeldetag: 14.03.1990
(51) Int. Cl.: C09J 5/00, C09J 163/00

(54) **Verfahren zum Kleben oder Vergiessen von Substraten und Vorrichtung zu seiner Durchführung**
Method and apparatus for glueing or moulding of substrates
Méthode pour coller ou couler des substrats et dispositif à cet effet

(30) Priorität: 23.03.1989 DE 3909688
(43) Veröffentlichungstag der Anmeldung: 26.09.1990
(73) Patentinhaber: THERA Patent GmbH & Co. KG Gesellschaft für industrielle Schutzrechte, D-82229 Seefeld (DE)
(72) Erfinder: Gasser, Oswald, Dr., D-8031 Seefeld (DE); Wanek, Erich, Dr., D-8031 Seefeld (DE); Schaidnagel, Helmut, D-8084 Inning (DE)
(74) Vertreter: Bunke, Holger, Dr.rer.nat. Dipl.-Chem.

(56) Entgegenhaltungen:
- EP-A- 0 279 199
- EP-A- 0 330 985
- DE-A- 2 618 897
- DE-A- 3 046 034
- DE-A- 3 724 838
- PATENT ABSTRACTS OF JAPAN, unexamined applications, C. Sektion, Band 6, Nr. 250, 9. Dezember 1982, THE PATENT OFFICE JAPANESE COVERNMENT, Seite 24 C 140
- PATENT ABSTRACTS OF JAPAN, unexamined applications, C Sektion , Band 6, Nr. 49, 31. März 1982, THE PATENT OFFICE JAPANESE GOVERNMENT Seite 20 C 96

## Beschreibung

Die Erfindung betrifft ein Verfahren zum Kleben oder Vergießen von Substraten mittels kationisch polymerisierbarer Massen, die vor der Fügung oder vor dem Verguß durch Bestrahlen mit sichtbarem Licht photoaktiviert werden und nach der Fügung oder dem Verguß der Substrate ohne Fortsetzung der Bestrahlung aushärten, sowie eine Vorrichtung zur Durchführung dieses Verfahrens.

Derartige Verfahren und Vorrichtungen sind beispielsweise aus der EP-A-0 279 199 sowie der JP-A-61-98740 bekannt. Dabei wird zur Photoaktivierung der kationisch polymerisierbaren Massen jedoch ausschließlich ultraviolette Strahlung verwendet. Bei einer UV-Bestrahlungsdauer von 10 sec. gelieren die bekannten Massen bei Raumtemperatur nach 20 bis 30 sec., bei 100°C dagegen schon nach weniger als 10 sec.

Da UV-härtbare Massen an den der UV-Strahlung zugänglichen Stellen rasch aushärten, an den weniger zugänglichen oder abgeschatteten Bereichen aber sehr viel langsamer oder überhaupt nicht aushärten, bedarf es eines zweiten Härtungsmechanismus, der durch Initiatoren der thermischen Polymerisation bewirkt wird und höhere Temperaturen erfordert. In vielen Anwendungsbereichen, beispielsweises beim Kleben oder Vergießen von elektronischen Bauelementen, verringert die mit der thermischen Polymerisation verbundene Temperaturbelastung jedoch die statistische Lebenserwartung der Substrate.

Um die mit der inhomogenen Photoaktivierung durch UV-Bestrahlung verbundenen Probleme zu verringern, wurde in den bereits genannten Druckschriften vorgeschlagen, die UV-härtbaren Massen bereits in der Applikationsvorrichtung, also vor dem Auftragen auf das Substrat, zu bestrahlen und erst dann die bereits photoaktivierten Massen dem Substrat oder einer Gießform zuzuführen. Hierdurch wird eine gleichmäßige Bestrahlung über den gesamten Querschnitt der Massen erreicht, während das Auftreten abgeschatteter Bereiche vermieden wird. Der Nachteil dieser Verfahren besteht jedoch darin, daß die Topfzeit der photoaktivierten Massen für viele Anwendungsbereiche zu stark verkürzt wird. Da die Massen bereits 20 bis 30 sec. nach Beendigung der UV-Bestrahlung gelieren, ist die Topfzeit erheblich kürzer als 20 bis 30 sec., da sich schon vor dem Beginn des Gelierens eine deutliche Verringerung der Initialklebrigkeit, eine deutliche Verringerung der Netzfähigkeit und ein merklicher Viskositätsanstieg bei den Massen bemerkbar macht.

Die bei den bekannten Verfahren verwendeten UV-härtbaren Massen sind außerdem gegenüber atmosphärischem Sauerstoff empfindlich. Ferner kann die bei Chip-Klebstoffen oft geforderte starke Einfärbung der Klebermasse die Eindringtiefe der UV-Strahlung vermindern, die vollständige Aushärtung somit verhindern und später zu Korrosionserscheinungen führen.

Aus der DE-PS 26 18 897 sowie den DE-OS 30 35 807 und 30 46 034 ist die Verwendung von kationisch polymerisierbaren Massen zum Kleben oder Vergießen von Substraten bekannt, die unter der Einwirkung von sichtbarem Licht im Wellenlängenbereich von 380 bis 800 nm gehärtet werden. Diese Massen enthalten als Photoinitiatoren Diaryljodoniumsalze oder Triarylsulfoniumsalze, jeweils zusammen mit einem Photosensibilisator in Form eines kationischen oder basischen Farbstoffes. In den Beispielen der DE-OS 30 46 034 werden Bestrahlungszeiten von 5 bis 10 Minuten angegeben. Die vollständige Aushärtung der so bestrahlten Massen tritt dann bei Raumtemperatur 1 bis 3 Stunden nach Beendigung der Bestrahlung ein.

Aus den DE-OS 36 43 400 und 37 24 838 sind ebenfalls Verfahren zum Kleben von Substraten mittels kationisch polymerisierbarer Massen bekannt, die vor ihrer Fügung durch Bestrahlen mit Licht im Wellenlängenbereich von 200 bis 700 nm aktiviert werden und dann ohne weitere Bestrahlung durch Stehenlassen im Dunkeln aushärten. Diese Massen wurden etwa 1 bis 3 Minuten lang bestrahlt und nach Beendigung der Bestrahlung unter einem Druck von 1 bis 200 MPa 2 bis 36 Stunden lang bei Raumtemperatur zur vollständigen Aushärtung stehen gelassen. Vom Beginn der Bestrahlung an gerechnet, war der Gelpunkt der Massen nach 210 sec. erreicht. Als Photoinitiatoren wurden bei diesen Massen Arylsulfinate, Diaryljodoniumsalze und Triarylsulfoniumsalze, jeweils zusammen mit Sensibilisatoren in Form von Farbstoffen bzw. Kampferchinon, verwendet.

Der Erfindung liegt die Aufgabe zugrunde, ein Verfahren der eingangs genannten Gattung und eine Vorrichtung zu seiner Durchführung zur Verfügung zu stellen, mit denen es gelingt, einerseits die Topfzeit der photoaktivierten Massen zu verlängern, ohne jedoch das Netzvermögen der Massen während der Topfzeit zu verringern, und andererseits die vollständige Aushärtung der Massen nach der Fügung bzw. nach dem Verguß der Substrate möglichst schnell und bei möglichst niedrigen Temperaturen zu erreichen.

Diese Aufgabe wird erfindungsgemäß dadurch gelöst, daß die Belichtung zur Photoaktivierung der Massen durch Bestrahlen mit Licht im Wellenlängenbereich von 400 bis 600 nm so lange durchgeführt wird, daß die Massen nach Beendigung der Belichtung noch mehr als 30 sec. lang uneingeschränkt applizierbar sind.

Im Vergleich zu den oben beschriebenen bekannten Verfahren können mit dem erfindungsgemäßen Verfahren kationisch polymerisierbare Massen erstmals in großen Schichtdicken, nämlich bis zu einigen Zentimetern, homogen gehärtet werden, wobei gleichzeitig eine erhebliche Verlängerung der Topfzeit, innerhalb der die Massen uneingeschränkt applizierbar sind, erreicht wird. Die Topfzeit beträgt erfindungsgemäß mindestens 30 sec., vorzugsweise mindestens 100 sec., und erreicht Werte bis zu etwa 60 Minuten.

Durch die Verwendung von sichtbarem Licht wird eine im Vergleich zur UV-Bestrahlung erheblich höhere Lagerstabilität der photoaktivierten Massen und damit eine Verlängerung der Verarbeitbarkeit erreicht, gleichzeitig aber erreicht, daß eine vollständige Aushärtung innerhalb einer je nach Temperaturführung innerhalb eines weiten Bereichs einstellbaren Zeit von weniger als 2 Min. bis zu mehr als 12 Std. vorgenommen werden kann.

Infolge der Langlebigkeit der bei der Belichtung mit sichtbarem Licht erfindungsgemäß erzeugten aktivierten Spezies ist es möglich, die verwendeten Massen sowohl vor als auch nach ihrem Auftrag auf die Oberflächen der zu verklebenden oder zu vergießenden Substrate zu belichten. Der Nachteil nicht oder nicht vollständig ausgehärteter Kleberschichten in abgeschatteten Zonen kann daher erfindungsgemäß nicht auftreten. Beide Stufen der Härtung, also sowohl die photoinduzierte Aktivierung mit Licht einer Wellenlänge im Bereich von 400 bis 600 nm als auch die endgültige Aushärtung, erfolgen erfindungsgemäß gleichmäßig durch die gesamte polymerisierbare Masse hindurch.

Wenn die photoinduzierte Belichtung erfindungsgemäß vor dem Auftrag der Massen auf die Substratoberflächen durchgeführt wird, so können die Massen in den verschiedensten lichtdurchlässigen Behältnissen bestrahlt werden. Diese Behältnisse müssen nicht mehr, wie bei den bekannten Verfahren, unbedingt aus Quarzglas oder UV-durchlässigem Acrylglas bestehen, sondern können auch aus leicht pigmentierten, UV-stabilisierten Kunststoffen gefertigt sein, die bis in den nahen sichtbaren Bereich absorbieren. Aus solchen Kunststoffen, beispielsweise Polycarbonaten, lassen sich wesentlich billigere Vorrats-und Applizierbehältnisse herstellen als z.B. aus Quarzglas, was bisher verwendet werden mußte.

Ein weiterer Vorteil des erfindungsgemäßen Verfahrens besteht darin, daß die Massen räumlich getrennt von der Applikationsvorrichtung mit einer einfachen handelsüblichen Lampe in einem ausreichend transparenten Vorratsgefäß aktiviert werden können. Dieses Vorratsgefäß kann nunmehr in ausreichender Zeit in einen beliebigen kommerziellen Dosierspender entleert werden, wonach die photoaktivierten Massen über einen längeren Zeitraum appliziert werden können. Außerdem steht für die Fügung vieler Substrate ein ausreichend langer Zeitraum zur Verfügung, wenn die Massen nach dem erfindungsgemäßen Verfahren behandelt werden.

Trotz der schonenden Aktivierung härten die erfindungsgemäß mit sichtbarem Licht aktivierten Massen nach der Fügung bzw. dem Verguß der Substrate bei erhöhter Temperatur, vorzugsweise bei einer Temperatur >60°C und <140°C, extrem schnell aus, nämlich während einer Zeitspanne von bis zu 10 Min., vorzugsweise während einer Zeitspanne von höchstens 2 Min. Es ist aber auch möglich, die Aushärtung bei Raumtemperatur über einen längeren Zeitraum, beispielsweise mehr als 12 Std., durchzuführen.

Die Photoaktivierung der verwendeten kationisch polymerisierbaren Massen kann erfindungsgemäß durch Variation der Belichtungszeit und der Energiedosis der verwendeten Lichtquellen so gesteuert werden, daß einerseits genügend reaktive Spezies für die nachfolgende schnelle Aushärtung erzeugt wird, aber andererseits noch keine Polymerisation an der Oberfläche unter Bildung einer Haut, die eine gute Benetzung der Substrate verhindern und damit die Massen ungeeignet machen würde, stattfindet, wie letzteres bei der Aktivierung mit kurzwelligerem Licht (<400 nm) auftritt. Massen, die mit kurzwelligerem UV-Licht aktiviert werden, müssen unmittelbar nach der Aktivierung entsprechend der Lehre der EP-A-0 279 199 weiterverarbeitet werden.

Durch die der Fügung bzw. dem Verguß erfindungsgemäß vorausgehende Aktivierung der verwendeten Massen wird die anschließende Aushärtung, die sowohl bei Raumtemperatur als auch unter Zuführung von Wärme erfolgen kann, so stark beschleunigt, daß sie wesentlich schneller abläuft als bei den bisher bekannten Verfahren.

Vorteilhafte Ausführungsformen des erfindungsgemäßen Verfahrens bestehen darin, daß die Aktivierung der Massen durch Bestrahlen mit Licht einer Wellenlänge von 420 bis 580 nm, vorzugsweise mit Licht einer Wellenlänge von 480 bis 520 nm, erfolgt. Die Dauer der Bestrahlung beträgt vorzugsweise 0,5 bis 300 sec.

Vorteilhafte Weiterbildungen des erfindungsgemäßen Verfahrens bestehen ferner darin, daß als kationisch polymerisierbare Masse eine fließfähige, photoaktivierbare Masse mit einer Viskosität von 0,05 bis 1000 Pa.s verwendet wird. Ein guter Kompromiß zwischen Verarbeitbarkeit und den benetzenden Eigenschaften der verwendeten Massen wird bei einer Viskosität dieser Massen, vor ihrer Aktivierung gemessen, von 0,1 bis 500 Pa.s erzielt, wobei sich ein Bereich von 0,4 bis 200 Pa.s als besonders vorteilhaft herausgestellt hat.

Photopolymerisierbare Massen, die im wesentlichen nach einem kationischen Reaktionsmechanismus polymerisieren, sind dem Fachmann beispielsweise aus den EP-A-0 094 915, 0 109 851 und 0 182 744 bekannt.

Als photopolymerisierbare Masse wird erfindungsgemäß zweckmäßig ein Gemisch verwendet, das besteht aus:
a) 10 bis 99,95 Gew.%, vorzugsweise 70 bis 98 Gew.%, mindestens eines kationisch härtbaren Harzes und/oder eines kationisch polymerisierbaren Monomers;
b) 0,05 bis 10 Gew.%, vorzugsweise 2 bis 6 Gew.%, mindestens eines Photoinitiators, der unter Lichteinwirkung Lewis-oder Brönsted-Säuren bildet;
c) 0 bis 89,95 Gew.%, vorzugsweise 0 bis 28 Gew.%, eines oder mehrerer Füllstoffe, thixotropierender Mittel, Haftvermittler und/oder anderer üblicher Zusatzstoffe.

Es können auch solche photopolymerisierbare Massen (Harze und/oder Monomere) benutzt werden, die neben einem kationischen auch einem radikalischen Härtungsmechanismus folgen. Solche Klebstoffmassen bestehen aus:
a) 10 bis 89,9 Gew.% mindestens eines kationisch härtbaren Harzes und/oder eines kationisch polymerisierbaren Monomers;
b) 0,05 bis 10 Gew.% mindestens eines Photoinitiators, der unter Lichteinwirkung Lewis- oder Brönsted-Säuren bildet;
c) 0 bis 89,9 Gew.% eines oder mehrerer Füllstoffe, thixotropierender Mittel, Haftvermittler und/oder anderer üblicher Zusatzstoffe;
d) 10 bis 80 Gew.% mindestens eines nach einem radikalischen Polymerisationsmechanismus polymerisierenden Harzes und/oder Monomers;
e) 0,05 bis 5 Gew.% mindestens eines Photoinitiators, der unter Lichteinwirkung Radikale erzeugt;
f) gegebenenfalls 0,05 bis 5 Gew.% mindestens eines Photosensibilisators und/oder Aktivators.

Dabei bestehen die nach einem radikalischen Polymerisationsmechanismus polymerisierenden Harze und/oder Monomere vorzugsweise aus den Acrylsäure- und/oder Methacrylsäureestern ein- oder mehrwertiger Alkohole, wobei die Acrylsäure- und/oder Methacrylsäureester mehrwertiger Alkohole besonders bevorzugt sind.

Zur Verwendung im Rahmen des erfindungsgemäßen Verfahrens eignen sich als kationisch härtbare Harze oder kationisch polymerisierbare Monomere beispielsweise mono- oder polyfunktionelle Vinylether und Vinylester. Geeignete Vinylether sind Trimethylolpropan-Trivinylether, Ethylenglykol-Divinylether und cyclische Vinylether. Besonders geeignet ist Triethylenglykoldivinylether.

Allgemein gut geeignete Verbindungen sind die Vinylester und Vinylether polyfunktioneller Alkohole, wobei Polyethylen-und Polypropylenglykole mit Vinylether-Endgruppen bevorzugt eingesetzt werden.

Weiterhin gut geeignet sind kationisch polymerisierbare heterocyclische Verbindungen, beispielsweise Epoxide. Bevorzugt verwendet werden hierbei die Glycidylether ein- und mehrwertiger Alkohole, beispielsweise die Diglycidylether von Bisphenol-A. Zur Einstellung einer hohen Reaktivität sind besonderes geeignet die Di- und Polyepoxide cycloaliphatischer Verbindungen, beispielsweise die Glycidylether und β-Methylglycidylether cycloaliphatischer Diole und Polyole.

Verwendbar sind ferner als Glycidylverbindungen die Glycidylester von Carbonsäuren, insbesondere von Di- und Polycarbonsäuren, beispielsweise die Glycidylester von Bernsteinsäure, Adipinsäure, Phthalsäure.

Beispiele für besonders reaktive Glycidylverbindungen sind die Diepoxide des Vinylcyclohexans und des Dicyclopentadiens sowie 3-(3′,4′-Epoxycyclohexyl)-8,9-epoxy-2,4-dioxyspiro(5.5)undecan und 3,4-Epoxycyclohexylmethyl-3′,4′-epoxycyclohexylcarboxylat.

Bevorzugte Epoxidharze sind gegebenenfalls vorverlängerte und/oder prepolymere Diglycidylether zweiwertiger Phenole oder zweiwertiger aliphatischer Alkohole mit zwei bis vier C-Atomen. Besonderes bevorzugt verwendet werden die vorverlängerten Diglycidylether des 2,2-bis-(4-Hydroxyphenyl)-propans.

Als Photoinitiatoren, die unter Lichteinwirkung Lewis- oder Brönsted-Säuren bilden, eignen sich ganz allgemein die für die kationische Polymerisation bekannten Photoinitiatoren, beispielsweise Aryldiazoniumsalze, Diaryljodoniumsalze, Triarylsulfoniumsalze sowie metallocenartige Komplexsalze, sofern sie mit Licht einer Wellenlänge im Bereich von 400 bis 600 nm gegebenenfalls zusammen mit einem Photosensibilisator für diesen Wellenlängenbereich aktivierbar sind.

Eine für die erfindungsgemäßen Zwecke bevorzugte Photoinitiatorenklasse sind die aus der EP-A-0 182 744 bekannten Metallocen-Komplexsalze, insbesondere die Verbindung (Ia) und (Ib): 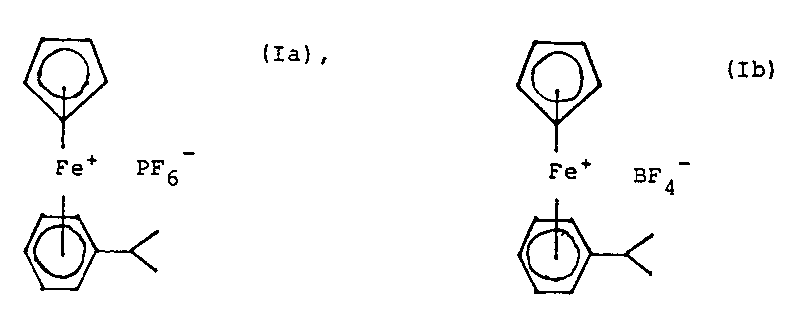
Eine weitere bevorzugte Klasse von Photoinitiatoren für die kationische Polymerisation sind die Diaryljodoniumsalze der Formel:

Ar₂J⁺X^{-,}

worin Ar ein gegebenenfalls substituiertes Aren ist, beispielsweise Benzol, Toluol, Xylol, Ethylbenzol, Methoxybenzol, Naphthalin, 1,2-Dihydronaphthalin, Phenanthren, Anthracen, 9,10-Dihydroanthracen, Diphenylen, Biphenyl, Cumol; und worin X⁻ ein komplexes Anion, beispielsweise BF₄⁻, PF₆⁻, AsF₆⁻, SbF₆⁻, vorzugsweise BF₄⁻ oder PF₆⁻, ist.

Vorzugsweise werden die Diaryljodoniumsalze zusammen mit Photoinitiatoren, die unter Lichteinwirkung Radikale erzeugen und Licht einer Wellenlänge >400 nm absorbieren, eingesetzt. Geeignete derartige Photoinitiatoren sind α-Diketone, Benzilketale sowie insbesondere Acylphosphinverbindungen der allgemeinen Formel II: 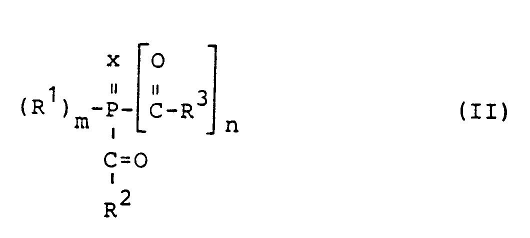
worin m = 1, n = 1 und x = O,
oder m = 2, n = 0 und x = O oder S,
- R¹: einen geradkettigen oder verzweigten C₁₋₆-Alkylrest,
einen Cyclohexyl-, Cyclopentyl-, Phenyl-, Naphthyl- oder Biphenylylrest,
einen Cyclopentyl-, Cyclohexyl-, Phenyl-, Naphthyl- oder Biphenylylrest, der substituiert ist durch F, Cl, Br, J, C₁-C₄-Alkyl und/oder C₁-C₄-Alkoxyl,
einen S- oder N-haltigen 5- oder 6-gliedrigen heterocyclischen Ring,
- R² und R³,: die gleich oder verschieden sind, einen Cyclohexyl-, Cyclopentyl-, Phenyl-, Naphthyl- oder Biphenylylrest,
einen Cyclopentyl-, Cyclohexyl-, Phenyl-, Naphthyl- oder Biphenylylrest, der substituiert ist durch F, Cl, Br, J, C₁-C₄-Alkyl und oder C₁-C₄-Alkoxyl, oder
einen S- oder N-haltigen 5- oder 6-gliedrigen heterocyclischen Ring oder
- R² und R³: miteinander zu einem Ring verknüpft sind, der 4 bis 10 Kohlenstoffatome enthält und durch 1 bis 6 C₁₋₄-Alkylreste substituiert sein kann.

Als Füllstoff können in den erfindungsgemäß verwendeten Massen Pulver von Aluminiumoxid, Siliciumdioxid, Calciumcarbonat, Titandioxid, Bariumsulfat, Glimmer und dergleichen enthalten sein, während als thixotropierendes Mittel vorzugsweise pulverförmiges Siliciumdioxid mit einer spezifischen Oberfläche von 50 bis 450 m²/g enthalten sein kann. Die eingesetzten Füllstoffe sind vorzugsweise silanisiert. Als Silanisierungsmittel können die an sich bekannten Silan-Kupplungsmittel, beispielsweise γ-Methacryloyloxypropyltrimethoxysilan und Glycidyloxypropyltrimethoxysilan verwendet werden.

Andere übliche Zusatzstoffe für die erfindungsgemäß verwendeten Klebstoffmassen sind beispielsweise Peroxide, Sensibilisatoren wie z.B. Perylenverbindungen, Pigmente, Farbstoffe, Antioxidantien und dergleichen.

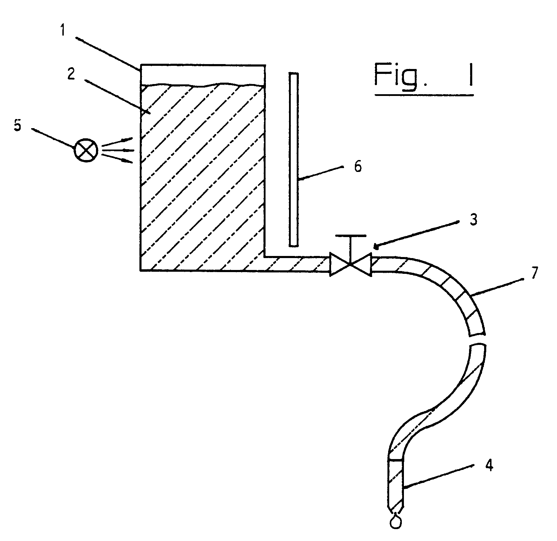

Gegenstand der Erfindung ist ferner eine Vorrichtung zur Durchführung des erfindungsgemäßen Verfahrens. Wie aus Fig. 1 ersichtlich, weist diese Vorrichtung ein Vorratsbehältnis 1 für die photoaktivierbaren Massen 2, eine Dosiereinrichtung 3 und eine Appliziereinrichtung 4, mindestens eine Strahlungsquelle 5 für die aktivierende Strahlung und gegebenenfalls einen oder mehrere Reflektoren 6 für die aktivierende Strahlung auf. Vorrichtungen dieser Gattung sind beispielsweise aus der EP-A-0 279 199 sowie der JP-A-61-98740 bekannt.

Die erfindungsgemäße Vorrichtung ist dadurch gekennzeichnet, daß die Strahlungsquelle 5 ausschließlich Licht einer Wellenlänge >400 nm aussendet und daß das Vorratsbehältnis 1 und/oder die Dosier- und Appliziereinrichtung 3, 4 mindestens teilweise für Strahlung eines Wellenlängenbereichs von 400 bis 600 nm durchlässig ist. Bei einer vorteilhaften Ausführungsform der erfindungsgemäßen Vorrichtung sind das Vorratsbehältnis 1 und die Dosier- und Appliziereinrichtung 3, 4 räumlich voneinander getrennt und durch Rohr- oder Schlauchleitungen 7 miteinander verbunden. Die Vorrichtung kann eine oder mehrere Strahlungsquellen oder Bestrahlungseinheiten 5 aufweisen.

Da das sichtbare Licht wesentlich tiefer in die photoaktivierbaren Massen einzudringen vermag als ultraviolette Strahlung, müssen die erfindungsgemäßen Massen nicht, wie im Stand der Technik, in der Dosier- und Appliziereinrichtung aktiviert werden, sondern sie können bereits in einem Vorratsbehältnis aktiviert werden, das räumlich von den Dosier- und Appliziereinrichtungen weit entfernt sein kann und nur durch Rohr- oder Schlauchleitungen mit den Dosier- und Appliziereinrichtungen verbunden ist. In den durch die Rohr- oder Schlauchleitungen gebildeten Förderweg für die photoaktivierten Massen können Fördermittel bekannter Art, beispielsweise Pumpen, integriert sein.

Die Erfindung wird anhand der folgenden Beispiele weiter erläutert:

### Beispiel 1

Es wird eine Harzzusammensetzung durch gleichmäßiges Mischen von 50 Gew.-Teilen 3,4-Epoxycyclohexylmethyl-3′,4′-epoxycyclohexylcarboxylat, 50 Gew.-Teilen eines niedermolekularen Bisphenol-A-Diglycidylethers (Araldit® GY250 der Fa. Ciba-Geigy), 3 Gew.-Teilen (η⁵-2,4-Cyclopentadien-1-yl)-[(1,2,3, 4,5,6- )-(1-methylethyl)-benzol]-eisen(1+)-hexafluorophosphat(1-) (Irgacure® 261 der Fa. Ciba-Geigy) und 5 Gew.-Teilen pulverförmigen hydrophobierten Siliciumdioxids mit einer spezifischen Oberfläche von 71 m²/g und einer Teilchengröße <100 nm (Silica R-202 der Fa. Degussa) hergestellt.

Die Harzzusammensetzung weist eine Viskosität von 10 Pa.s auf (Haake-Viskosimeter Rotovisko RV 100, PKI 0.5/28, 10 %D). Die Harzzusammensetzung wird anschließend mittels eines Dispensers an einem SMD(Surface Mounted Device)-Manipulator der Fa. Fritsch auf eine gedruckte Leiterplatte in Form eines standfesten Klebstofftropfens zwischen den Kontaktanschlüssen aufgebracht. Der Klebstofftropfen weist ein Verhältnis zwischen Durchmesser und Höhe von ca. 2:1 auf. Dieser Vorgang wird für alle Bauteilverbindungsstellen, etwa 100 an der Zahl, wiederholt, wofür insgesamt etwa 3 Min. erforderlich sind.

Die Klebstofftropfen werden anschließend mit einem Bestrahlungsgerät, welches aktinisches Licht im Bereich von 400 bis 600 nm aussendet (DELO-LUX 450 der Fa. Delo Kunststoffchemie GmbH & Co. KG), über einen Zeitraum von 4 Min. aktiviert. Danach wird die Leiterplatte mit elektronischen Bauelementen bestückt, was einen Zeitbedarf von insgesamt 5 Min. erfordert. Nach 18 Std. bei einer Temperatur von etwa 23°C (Raumtemperatur) wird die so bestückte Leiterplatte in ein Schlepplötbad (Fa. Zevatron Typ EFT-1) eingebracht. Die Leiterplatte wird mit maximaler Geschwindigkeitsstufe 10 in einen auf 250°C erhitzten Behälter mit geschmolzenem Lot eingefahren und 10 sec. eingetaucht belassen, um die zu verlötenden Elektrodenteile der Bauteile mit den Verbindungsanschlüssen durch das Lötmittel zu verlöten. Während des Verlötens tritt keine Ablösung der Bauteile von der gedruckten Leiterplatte auf, und man erhält einwandfrei verlötete Bauteile. Das Eintauchen wird 5 x wiederholt, ohne daß eine Ablösung der Bauteile von der gedruckten Leiterplatte eintritt.

### Vergleichsbeispiel 1

Eine photoaktivierbare Epoxidmasse wird durch homogenes Vermischen von 100 Massenteilen eines cycloaliphatischen Diepoxids (Araldit® CY 179 der Fa. Ciba-Geigy), 100 Massenteilen eines niedermolekularen Bisphenol-A-Diepoxids (Araldit® MY 790 der Fa. Ciba-Geigy), 4 Massenteilen eines Photoinitiators (Irgacure® 261 der Fa. Ciba-Geigy) und 0,5 Massenteilen Anthracen als Sensibilisator hergestellt.

Die beschriebene Masse wird unter Verwendung einer leistungsstarken Quecksilberdampflampe (Blue-Point der Fa. Hönle), welche am Ausgang des flexiblen Lichtleiters mit einem UV-Bandpaßfilter UG 1 (DIN-Bezeichnung BP 351/80, Dicke 1 mm) versehen ist, um alles Licht im sichtbaren Bereich auszufiltern und ausschließlich UV-Strahlung zuzulassen, bestrahlt. Ein Tropfen der beschriebenen Masse wird auf weißen Untergrund aufgebracht und im Abstand von 5 mm durch das Filter UG 1 belichtet (aktiviert).

In einer Versuchsreihe wurde jener Zeitpunkt ermittelt, der ausreicht, die Masse soweit zu aktivieren, daß sie nachfolgend bei 110°C aushärtet. Dieser Aushärteprozeß bei erhöhter Temperatur tritt bereits nach 6 bis 7 sec. Aktivierung im UV-Licht ein, allerdings nur in Form einer Hautbildung ohne vollständige Durchhärtung. Nach 9 sec. Aktivierung ist die Aushärtung bei erhöhter Temperatur vollständig.

Ein Tropfen der beschriebenen Masse wird nunmehr auf weißen Untergrund aufgebracht und im Abstand von 5 mm durch das Filter 9 sec. belichtet (aktiviert). Im Zuge dieser Aktivierung bleibt die Masse dünnflüssig und geliert in weiteren 15 bis 20 sec. bei Raumtemperatur von 23°C. Bei Verwendung von UV-Licht beträgt somit die Topfzeit dieser Masse 15 bis 20 sec. Ohne Filter erhält man nach 2 sec. Aktivierung eine Topfzeit von 15 sec.

### Beispiel 2

Eine photoaktivierbare Epoxidmasse wird wie in Beispiel 1 hergestellt. Ein Tropfen dieser Masse wird mit einer Quecksilberdampflampe (Blue-Point der Fa. Hönle), die am Ausgang des flexiblen Lichtleiters nunmehr mit einem Filter GG 395 versehen ist, bestrahlt. Dieses Filter ist undurchlässig für den UV-Anteil des Spektrums und läßt ausschließlich Licht über 400 nm durch. Ein Tropfen der beschriebenen Masse wird auf weißen Untergrund aufgebracht und im Abstand von 5 mm durch das Filter GG 395 belichtet (aktiviert).

In einer Versuchsreihe wurde jener Zeitpunkt ermittelt, der ausreicht, die Masse soweit zu aktivieren, daß sie nachfolgend bei 110°C aushärtet. Dieser Aushärtungsprozeß bei erhöhter Temperatur tritt bereits nach 2 sec. Aktivierung vollständig ein.

Ein Tropfen der beschriebenen Masse wird nunmehr auf weißen Untergrund aufgebracht und 2 sec. im Abstand von 5 mm durch das Filter GG 395 belichtet (aktiviert). Im Zuge dieser Aktivierung bleibt die Masse dünnflüssig und geliert nach weiteren 15 Min. bei Raumtemperatur von 23°C. Bei Verwendung sichtbaren Lichts zur Aktivierung beträgt daher die Topfzeit dieser Masse 15 Min.

### Vergleichsbeispiel 2

Eine photoaktivierbare Epoxidmasse wird wie in Beispiel 1 hergestellt. Eine handelsübliche Polystyrol-Küvette der Fa. von Minden Laborbedarf mit einem Durchmesser von 10 mm und einer Strahlungs-Durchlässigkeit von 350 nm bis 800 nm wird bis zu einer Höhe von 5 mm mit der Masse befüllt. Diese Küvette wird mit der Quecksilberdampflampe (Blue-Point der Fa. Hönle), welche am Ausgang des flexiblen Lichtleiters mit einem UV-Bandpaßfilter UG 1 der Dicke 1 mm versehen ist, im unmittelbaren Kontakt zur Küvette belichtet (aktiviert). Die Küvette wird 2 x 10 sec. belichtet, wobei sich an der dem Lichtwellenleiter zugewandten Küvettenwandung innen eine Haut bildet (angelierte Masse). Die noch in der Küvette befindliche flüssige Masse geliert weder bei Raumtemperatur noch bei erhöhter Temperatur. Dieses Beispiel zeigt, daß unter Verwendung von UV-Licht mit seiner geringen Eindringtiefe bereits eine Aushärtung in der ersten bestrahlten Schicht eintritt, ohne daß in tieferen Schichten eine Aktivierung stattfindet, die das anschließende Gelieren bei Raumtemperatur oder erhöhter Temperatur bewirken würde. Die Anwendung von UV-Licht ist somit für diese Aktivierung in der Küvette ungeeignet.

### Beispiel 3

Eine photoaktivierbare Epoxidmasse wird wie in Beispiel 1 hergestellt. Diese Masse wird, wie in Beispiel 3 beschrieben, in eine Polystyrol-Küvette (Fa. von Minden Laborbedarf) bis zu einer Höhe von 5 mm eingefüllt.

Mittels einer Quecksilberdampflampe (Blue-Point der Fa. Hönle), welche am Ausgang des flexiblen Lichtleiters mit einem Filter GG 395 versehen ist und somit ausschließlich Licht im sichtbaren Wellenlängenbereich durchläßt, wird die Küvette im unmittelbaren Kontakt belichtet. Diese Belichtung wurde viermal 10 sec. durchgeführt (Aktivierung). Nach dieser Bestrahlung war keine Gelierung an der dem Lichtwellenleiter zugewandten Wandung feststellbar (keine Hautbildung), und die Masse in der Küvette gelierte nach weiteren 12 Min. bei Raumtemperatur von 23°C. Bei Verwendung von Licht im sichtbaren Wellenlängenbereich beträgt somit die Topfzeit der photopolymerisierbaren Masse in diesem Beispiel 12 Min.

### Beispiel 4

Es wird eine photoaktivierbare Epoxidmasse wie in Beispiel 1 hergestellt. Ein Tropfen dieser Masse wird auf weißen Untergrund aufgebracht und mit einem Lichtgerät (Elipar II der Fa. ESPE GmbH & Co. KG), welches ausschließlich Licht im sichtbaren Wellenlängenbereich 400 bis 500 nm ausstrahlt, im Abstand von 5 mm 9 sec. belichtet (aktiviert). Im Zuge dieser Bestrahlung bleibt die Masse unverändert dünnflüssig und geliert nach 11 Min. bei Raumtemperatur von 23°C. Bei Verwendung der beschriebenen Masse in dieser Versuchsanordnung ergibt sich daher eine Topfzeit von 11 Min.

Wie sich aus den vorstehenden Beispielen/Vergleichsbeispielen ergibt, werden bei Anwendung des erfindungsgemäßen Verfahrens überraschenderweise die folgenden Nachteile der mit UV-Strahlung arbeitenden Verfahren gleichzeitig beseitigt, nämlich (1) die Hautbildung an der Oberfläche der Massen, (2) die zu geringe Eindringtiefe der aktivierenden Strahlung und (3) die rasche Gelierung bzw. zu kurze Topfzeit der photoaktivierten Massen.

In der folgenden Tabelle sind die Belichtungsbedingungen und die damit erzielten Topfzeiten angegeben:

**Tabelle**

| Beispiel | Belichtung | Topfzeit | Endhärtung (110°C) |
|---|---|---|---|
| Vergleichsbeispiel 1 | 9 sec. UV (366 nm) | 10-20 sec. | ja |
| | 2 sec. UV + sichtbares Licht | 15 sec. | ja |
| Beispiel 2 | 2 sec. sichtb.Licht (400-600 nm) | 900 sec. | ja |
| Beispiel 4 | 9 sec. sichtb.Licht (400-500 nm) | 660 sec. | ja |

Die mit dem erfindungsgemäßen Verfahren erzielbaren Vorteile werden nachfolgend anhand einiger beispielhafter Anwendungsfälle erläutert:

In der SMT-Technik (Surface Mounted Technology) kann man mit sehr schnellen Bestückungsautomaten ca. zwei Klebstoffpunkte pro Sekunde setzen und gleichzeitig auf der vorher vollständig mit Klebstoff versehenen Leiterplatte zwei Bauelemente pro Sekunde bestücken, wobei die Dauer der Förderung der Klebstoffmassen vom Ort der Photoaktivierung zur Leiterplatte nicht berücksichtigt ist. Eine kleinformatige SMD-Leiterplatte weist durchschnittlich etwa 100 Bauelemente auf. Somit ergibt sich eine Zeit von etwa 50 sec. für das Setzen aller Klebstoffpunkte und, wiederum ohne Berücksichtigung der Zeit für den Weitertransport der Leiterplatte, nochmals eine Zeit von 50 sec. für den Bestückungsvorgang, zusammen also 100 sec. Da auch das letzte Bauteil noch auf einen Tropfen Klebstoffmasse mit gutem Netzvermögen und ausreichender Initialklebrigkeit aufgesetzt werden muß, darf die Masse mindestens während dieser Zeit von 100 sec. weder anpolymerisieren noch gelieren, muß also eine Topfzeit von mehr als 100 sec. aufweisen. Bei Anwendung des erfindungsgemäßen Verfahrens läßt sich dies ohne weiteres erreichen, nicht aber mit den Verfahren gemäß dem eingangs genannten Stand der Technik. Mit dem erfindungsgemäßen Verfahren können auch wesentlich größere Leiterplatten mit wesentlich mehr Bauelementen nach der SMT-Technik bestückt werden, wobei statt eines Bestückungsautomaten auch der manuelle Betrieb mit einem SMD-Manipulator möglich ist, obwohl die benötigte Topfzeit dann bis zu 60 Min. betragen kann.

Ein anderes Anwendungsgebiet für das erfindungsgemäße Verfahren sind Fügeverfahren, die sich durch eine umfangreiche Vorbeschichtung der zu verklebenden Teile mit Klebstoff auszeichnen und bei denen die endgültige Montage der zu verklebenden Substrate erst später stattfinden kann. Als Substrate können hierbei Karosserie- oder Innenausbauteile von Kraftfahrzeugen, und zwar von Land-, Luft- und Wasserfahrzeugen, aber auch Dichtungen für Kraftfahrzeug- und sonstige Fenster und Türen und Profile aller Art verwendet werden, unabhängig davon, aus welchen Materialien diese Substrate bestehen. Die Substrate können beispielsweise aus Metall, Kunststoff, Glas, Keramik, Gummi, Papier, Pappe oder textilen Materialien bestehen, oder es kann sich um Verbundstoffe aus mehreren der vorgenannten Materialien handeln.

Beim Kleben und Dichten im Automobilbau, etwa bei Schiebedachrahmen oder Haubenversteifungen, müssen lange Raupen aus der als Klebstoff verwendeten kationisch polymerisierbaren Masse auf die Karosserie aufgetragen werden. Die Raupenlänge kann bei Schiebedachrahmen 3 m und bei Haubenversteifungen 5 m übersteigen. Im Falle des Schiebedachrahmens benötigt ein üblicher Roboter mit einer Auftragsgeschwindigkeit von 5 cm/sec. mehr als 60 sec., im Falle der Haubenversteifung mehr als 100 sec. für den Auftrag der Klebstoffraupe. Ohne Berücksichtigung des Zeitbedarfs für die Förderung der aktivierten Klebermasse vom Ort der Aktivierung zum Ort der Auftragsvorrichtung, muß damit die Topfzeit der Massen mehr als 60 bzw. 100 sec. betragen. Erst nach Ablauf dieser Zeitspanne ist es möglich, den Schiebedachrahmen bzw. die Haubenversteifung auf die Klebstoffraupe aufzubringen und mit der Aushärtung zu beginnen. Das erfindungsgemäße Verfahren erfüllt somit in idealer Weise alle Voraussetzungen für den Einsatz bei einem solchen Fügeverfahren.

Ein weiterer Vorteil des erfindungsgemäßen Verfahrens ergibt sich daraus, daß die photoaktivierten Massen nach der Fügung der Substrate ein Nachjustieren erlauben.

So ist es z.B. beim Verkleben einer Stellschraube eines Thermostaten oder Sicherungsautomaten notwendig, nach der Applizierung der Klebermasse auf das Gewinde der Stellschraube den Thermostaten oder Sicherungsautomaten zu montieren und anschließend mittels der Stellschraube auf einem Prüfstand einzujustieren. Hierzu muß die Stellschraube zu diesem Zeitpunkt noch drehbar sein, was aufgrund der erfindungsgemäß erreichten langen Topfzeiten ohne weiteres möglich ist. Erst nach Einstellung des Schaltpunkts wird die Klebermasse im Gewinde der Stellschraube ausgehärtet, so daß kein Verstellen mehr möglich ist. Für den gesamten Vorgang vom Auftragen des Klebstoffs auf die Stellschraube bis zum Einstellen des Schaltpunktes und Aushärten der Klebermasse werden insgesamt etwa 15 bis 20 Min. benötigt. Auch diese Anforderung wird durch das erfindungsgemäße Verfahren in idealer Weise erfüllt.

Bei einer anderen Gruppe von technischen Fügeverfahren wird die Klebermasse im Siebdruck- oder Schablonendruckverfahren auf die zu verklebenden Substrate aufgebracht. Hierbei ist es notwendig, daß die Massen über einen längeren Zeitraum auf das Sieb aufgebracht werden können und uneingeschränkt applizierfähig bleiben, bis sie mittels eines Rakels durch das Sieb oder die Schablone auf die Substrate aufgebracht worden sind. Hierzu sind Zeitspannen von einigen Minuten bis zu 1 Std. erforderlich. Auch diese Anwendung ist mit dem erfindungsgemäßen Verfahren möglich.

Bei anderen Anwendungsfällen können die polymerisierbaren Massen nach ihrer erfindungsgemäßen Photoaktivierung über Pumpen und längere Rohrleitungen auf mehrere Arbeitsplätze verteilt werden. Je nach Fließgeschwindigkeit der Masse in den Rohrleitungen sind hierbei Topfzeiten von einigen Minuten bis zu 1 Std. erforderlich.

Wenn von einem zentralen Behältnis, in dem die Massen photoaktiviert worden sind, Mehrfachwerkzeuge zum Verguß einer Vielzahl von Teilen gleichzeitig mit den Massen versorgt werden müssen, wird ebenfalls eine längere Topfzeit im Bereich zwischen einigen Minuten bis zu 1 Std. benötigt. Das erfindungsgemäße Verfahren eignet sich auch für diese Anwendungsfälle hervorragend.

Eine weitere vorteilhafte Einsatzmöglichkeit des erfindungsgemäßen Verfahrens besteht darin, die Photoaktivierung der Massen in einer zentralen Vorrichtung, beispielsweise in einem transparenten Behälter, durchzuführen und die aktivierten Massen anschließend mit einem kommerziellen Applizier- oder Dosiersystem auf das gewünschte Substrat aufzubringen. So ist es beispielsweise möglich, 500 g der lichtaktivierbaren Massen unter einer DELO-LUX 450-Lampe der Fa. Delo zu aktivieren und anschließend in den Druckbehälter eines Dosierautomaten (DELOMAT 926 der Fa. Delo) überzuführen. Aus dem Druckbehälter wird der aktivierte Kleber über Schlauchleitungen und eine Dispenserspitze auf das Substrat aufgebracht. Bis zur vollständigen Entleerung des Behälters ist, je nach Fördergeschwindigkeit, eine Topfzeit von einigen Minuten bis zu 1 Std. erforderlich.

Es ist jedoch auch möglich, die Massen in einer transparenten Kartusche (Typ VPE der Fa. GLT, Pforzheim) zu aktivieren und anschließend mit einem Dosiergerät (Modell 1000 DE der Fa. GLT) zu applizieren. Hierzu ist eine Topfzeit der Massen von einigen Minuten bis zu 1 Std. erforderlich, was mit dem erfindungsgemäßen Verfahren ohne weiteres erreicht wird.

Ein weiterer Vorteil besteht darin, daß die erfindungsgemäß photoaktivierten Massen im Falle einer Störung im automatisierten Fertigungsprozeß aufgrund ihrer verlängerten Topfzeiten nicht zu einer sofortigen Verklebung der mit den aktivierten Massen benetzten Rohrleitungen oder sonstigen mechanischen Teile führen. Wegen der langen Topfzeiten ist es vielmehr möglich, innerhalb einiger Minuten bis zu 1 Std. die Störung zu beheben oder, falls die Störung nicht innerhalb 1 Std. behoben werden kann, die mit den Massen kontaminierten Maschinenteile zu reinigen, bevor die Aushärtung der Massen beginnt.

Ganz allgemein weist das erfindungsgemäße Verfahren außerdem noch folgende Vorteile auf: Eine geringe Flüchtigkeit und Viskosität sowie ein geringes toxisches Potential der verwendbaren Monomeren, keine Inhibierung der Reaktion durch Luftsauerstoff und dadurch keine Schmierschichten, hervorragende Haftung auf unterschiedlichen Substraten, hervorragende chemische und physikalische Eigenschaften der polymerisierten Massen sowie hohe Lagerstabilität der nichtaktivierten Massen.

## Patentansprüche

1. Verfahren zum Kleben oder Vergießen von Substraten mittels kationisch polymerisierbarer Massen, die vor der Fügung oder vor dem Verguß durch Bestrahlen mit sichtbarem Licht photoaktiviert werden und nach der Fügung oder dem Verguß der Substrate ohne Fortsetzung der Bestrahlung aushärten, **dadurch gekennzeichnet,** daß die Belichtung zur Photoaktivierung der Massen durch Bestrahlen mit Licht im Wellenlängenbereich von 400 bis 600 nm so lange durchgeführt wird, daß die Massen nach Beendigung der Belichtung noch mehr als 30 sec. lang uneingeschränkt applizierbar sind.

2. Verfahren nach Anspruch 1, **dadurch gekennzeichnet,** daß die Belichtung zur Photoaktivierung der Massen so lange durchgeführt wird, daß die Massen nach Beendigung der Belichtung noch mehr als 100 sec. lang uneingeschränkt applizierbar sind.

3. Verfahren nach Anspruch 1, **dadurch gekennzeichnet,** daß die Massen zu ihrer Photoaktivierung 0,5 bis 300 sec. lang belichtet werden.

4. Verfahren nach einem der Ansprüche 1 bis 3, **dadurch gekennzeichnet,** daß die Photoaktivierung der Massen durch Bestrahlen mit Licht einer Wellenlänge von 420 bis 580 nm, vorzugsweise von 480 bis 520 nm, erfolgt.

5. Verfahren nach einem der Ansprüche 1 bis 4, **dadurch gekennzeichnet,** daß das Aushärten der photoaktivierten Massen nach der Fügung bzw. dem Verguß der Substrate während einer Zeitspanne von bis zu 10 Min., vorzugsweise höchstens 2 Min., bei einer Temperatur >60°C und <140°C durchgeführt wird.

6. Verfahren nach einem der Ansprüche 1 bis 5, **dadurch gekennzeichnet,** daß als kationisch polymerisierbare Masse eine fließfähige photoaktivierbare Masse mit einer Viskosität von 0,05 bis 1000 Pa.s, vorzugsweise 0,4 bis 200 Pa.s, verwendet wird.

7. Verfahren nach einem der Ansprüche 1 bis 6, **dadurch gekennzeichnet,** daß eine Masse verwendet wird, die besteht aus:
a) 10 bis 99,95 Gew.% mindestens eines kationisch härtbaren Harzes und/oder eines kationisch polymerisierbaren Monomers;
b) 0,05 bis 10 Gew.% mindestens eines Photoinitiators, der unter Lichteinwirkung Lewis- oder Brönsted-Säuren bildet;
c) 0 bis 89,95 Gew.% eines oder mehrerer Füllstoffe, thixotropierender Mittel, Haftvermittler und/oder anderer üblicher Zusatzstoffe.

8. Verfahren nach Anspruch 7, **dadurch gekennzeichnet,** daß eine Masse verwendet wird, die besteht aus:
a) 70 bis 98 Gew.% mindestens eines kationisch härtbaren Harzes und/oder eines kationisch polymerisierbaren Monomers;
b) 2 bis 6 Gew.% mindestens eines Photoinitiators, der unter Lichteinwirkung Lewis oder Brönsted-Säuren bildet;
c) 0 bis 28 Gew.% eines oder mehrerer Füllstoffe, thixotropierender Mittel, Haftvermittler und/oder anderer üblicher Zusatzstoffe.

9. Verfahren nach Anspruch 7 oder 8, **dadurch gekennzeichnet,** daß die Komponente a) der Masse mindestens teilweise aus den Diglycidylethern zweiwertiger Phenole und/oder zweiwertiger aliphatischer Alkohole besteht.

10. Verfahren nach einem der Ansprüche 1 bis 9, **dadurch gekennzeichnet,** daß die polymerisierbaren Massen in Form von Tropfen, Raupen oder durchgehenden Schichten auf die Substrate aufgetragen werden.

11. Verfahren nach einem der Ansprüche 1 bis 9, **dadurch gekennzeichnet,** daß die polymerisierbaren Massen im Sieb-oder Schablonendruckverfahren auf die Substrate aufgetragen werden.

12. Verfahren nach einem der Ansprüche 1 bis 11, **dadurch gekennzeichnet,** daß die Photoaktivierung der Massen durchgeführt wird, bevor sie auf die Substratoberflächen aufgetragen werden.

13. Verfahren nach einem der Ansprüche 1 bis 11, **dadurch gekennzeichnet,** daß die Photoaktivierung der Massen durchgeführt wird, nachdem sie auf die Substratoberflächen aufgetragen worden sind.

14. Vorrichtung zur Durchführung des Verfahrens nach einem der Ansprüche 1 bis 13, mit einem Vorratsbehältnis für die photoaktivierbaren Massen, einer Dosier- und Appliziereinrichtung, mit mindestens einer Strahlungsquelle und gegebenenfalls mit Reflektoren, **dadurch gekennzeichnet,** daß die Strahlungsquelle ausschließlich Licht einer Wellenlänge >400 nm aussendet und daß das Vorratsbehältnis und/oder die Dosier- und Appliziereinrichtung mindestens teilweise für Strahlung eines Wellenlängenbereichs von 400 bis 600 nm durchlässig ist.

15. Vorrichtung nach Anspruch 14, **dadurch gekennzeichnet,** daß das Vorratsbehältnis und die Dosier- und Appliziereinrichtung räumlich voneinander getrennt und durch Rohr- oder Schlauchleitungen miteinander verbunden sind.

## Claims

1. A method for bonding or potting substrates by means of cationically polymerizable masses being photo-activated before joining or potting by irradiation with visible light and curing after the joining or potting of the substrates without the irradiation being continued, characterized in that the exposure for photo-activation of the masses by irradiation with light in the wavelength range of 400 to 600 nm is carried out so long that the masses are unlimitedly applicable for more than 30 sec. after exposure is finished.

2. The method of claim 1, characterized in that the exposure for photo-activation of the masses is carried out so long that the masses are unlimitedly applicable for more than 100 sec. after exposure is finished.

3. The method of claim 1, characterized in that the masses are exposed for 0.5 to 300 sec. for photo-activation.

4. The method of any one of claims 1 to 3, characterized in that photo-activation of the masses is carried out by irradiation with light having a wavelength of 420 to 580 nm, preferably of 480 to 520 nm.

5. The method of any one of claims 1 to 4, characterized in that curing of the photo-activated masses after said joining or potting respectively of the substrates is carried out for a period of up to 10 min, preferably 2 min maximum, at a temperature of > 60°C and < 140°C.

6. The method of any one of claims 1 to 5, characterized in that, as the cationically polymerizable mass, a flowable photo-activatable mass having a viscosity of 0.05 to 1000 Pa.s, preferably 0.4 to 200 Pa.s, is used.

7. The method of any one of claims 1 to 6, characterized in that there is used a mass consisting of:
a) 10 to 99.95 wt.-% of at least one cationically hardenable resin and/or cationically polymerizable monomer;
b) 0.05 to 10 wt.-% of at least one photo-initiator forming Lewis or Brönsted acids under the influence of light;
c) 0 to 89.95 wt.-% of one or several fillers, thixotroping agents, coupling agents and/or other common additives.

8. The method of claim 7, characterized in that there is used a mass consisting of:
a) 70 to 98 wt.-% of at least one cationically hardenable resin and/or cationically polymerizable monomer;
b) 2 to 6 wt.-% of at least one photo-initiator forming Lewis or Brönsted acids under the influence of light;
c) 0 to 28 wt.-% of one or several fillers, thixotroping agents, coupling agents and/or other common additives.

9. The method of claim 7 or 8, characterized in that component a) of the mass consists, at least in part, of the diglycidyl ethers of divalent phenols and/or divalent aliphatic alcohols.

10. The method of any one of claims 1 to 9, characterized in that the polymerizable masses are applied onto the substrates in the form of drops, beads or continuous layers.

11. The method of any one of claims 1 to 9, characterized in that the polymerizable masses are applied onto the substrates in a screen or mask printing process.

12. The method of any one of claims 1 to 11, characterized in that photo-activation of the masses is carried out before the latter are applied onto the substrate surfaces.

13. The method of any one of claims 1 to 11, characterized in that photo-activation of the masses is carried out after the latter have been applied onto the substrate surfaces.

14. An apparatus for carrying out the method according to any one of claims 1 to 13, comprising a supply container for the photo-activatable masses, dosing and application means, at least one radiation source and optional reflectors, characterized in that the radiation source exclusively emits light having a wavelength of > 400 nm and that the supply container and/or the dosing and application means are transparent to radiation of a wavelength range of 400 to 600 nm at least in part.

15. The apparatus of claim 14, characterized in that the supply container and the dosing and application means are spatially separated from each other and connected to each other by pipings or tubings.

## Revendications

1. Procédé pour coller ou sceller des substrats à l'aide de compositions polymérisables par polymérisation cationique qui, avant l'assemblage collé ou avant le scellement, sont photoactivées par exposition à une lumière visible et, après l'assemblage collé ou après le scellement des substrats, durcissent sans que se poursuive l'exposition, caractérisé en ce que l'éclairement, destiné à photoactiver les compositions par exposition à une lumière ayant une longueur d'onde comprise entre 400 et 600 nm, est mis en oeuvre jusqu'à ce que les compositions, à la fin de l'éclairement, puissent encore être appliquées sans limitation pendant plus de 30 secondes.

2. Procédé selon la revendication 1, caractérisé en ce que l'éclairement destiné à photoactiver les compositions est mis en oeuvre jusqu'à ce que les compositions, après la fin de l'éclairement, puissent encore être appliquées sans limitation pendant plus de 100 secondes.

3. Procédé selon la revendication 1, caractérisé en ce que, pour être photoactivées, les compositions sont éclairées pendant 0,5 à 300 secondes.

4. Procédé selon l'une des revendications 1 à 3, caractérisé en ce que la photoactivation des compositions s'effectue par exposition à une lumière ayant une longueur d'onde de 420 à 580 nm et, de préférence, de 480 à 520 nm.

5. Procédé selon l'une des revendications 1 à 4, caractérisé en ce que le durcissement des compositions photoactivées, après assemblage collé ou après scellement des substrats, s'effectue pendant un laps de temps allant jusqu'à 10 minutes, de préférence au plus égal à 2 minutes, à une température supérieure à 60°C et inférieure à 140°C.

6. Procédé selon l'une des revendications 1 à 5, caractérisé en ce qu'on utilise, comme composition polymérisable par polymérisation cationique, une composition photoactivable fluide ayant une viscosité de 0,05 à 1000 et, de préférence, de 0,4 à 200 Pa.s.

7. Procédé selon l'une des revendications 1 à 6, caractérisé en ce qu'on utilise une composition constituée:
a) de 10 à 99,95 % en poids d'au moins une résine pouvant durcir par durcissement cationique et/ou d'un monomère polymérisable par polymérisation cationique ;
b) de 0,05 à 10 % en poids d'au moins un photoamorceur formant, sous l'effet de la lumière, des acides de Lewis ou de Brönsted ;
c) de 0 à 89,95 % en poids d'un ou plusieurs matériaux de charge, agents de thixotropisation, promoteurs d'adhérence et/ou autres additifs usuels.

8. Procédé selon la revendication 7, caractérisé en ce qu'on utilise une composition constituée :
a) de 70 à 98 % en poids d'au moins une résine durcissable par durcissement cationique et/ou d'un monomère polymérisable par polymérisation cationique ;
b) de 2 à 6 % en poids d'au moins un photoamorceur formant, sous l'effet de la lumière, des acides de Lewis ou de Brönsted ;
c) de 0 à 28 % en poids d'un ou plusieurs matériaux de charge, agents de thixotropisation, promoteurs d'adhérence et/ou autres additifs usuels.

9. Procédé selon la revendication 7 ou 8, caractérisé en ce que le composant a) de la composition est constitué, au moins partiellement, des éthers diglycidyliques de diphénols et/ou de dialcools aliphatiques.

10. Procédé selon l'une des revendications 1 à 9, caractérisé en ce que les compositions polymérisables sont appliquées sur les substrats sous forme de gouttes, de chenilles ou de couches continues.

11. Procédé selon l'une des revendications 1 à 9, caractérisé en ce que les compositions polymérisables sont appliquées sur les substrats par le procédé de sérigraphie ou d'impression au pochoir.

12. Procédé selon l'une des revendications 1 à 11, caractérisé en ce qu'on met en oeuvre la photoactivation des compositions avant de les appliquer sur les surfaces du substrat.

13. Procédé selon l'une des revendications 1 à 11, caractérisé en ce que la photoactivation des compositions est mise en oeuvre après qu'elles ont été appliquées sur les surfaces du substrat.

14. Dispositif pour mettre en oeuvre le procédé selon l'une des revendications 1 à 13, comportant un réservoir destiné aux compositions photoactivables, un dispositif de dosage et d'application, au moins une source de rayonnement et éventuellement des réflecteurs, caractérisé en ce que la source de rayonnement émet exclusivement une lumière ayant une longueur d'onde supérieure à 400 nm, et en ce que le réservoir et/ou le dispositif de dosage et d'application est, au moins partiellement, transparent au rayonnement correspondant à une longueur d'onde comprise entre 400 et 600 nm.

15. Dispositif selon la revendication 14, caractérisé en ce que le réservoir et le dispositif de dosage et d'application sont spatialement séparés l'un de l'autre et sont reliés l'un à l'autre par des tuyauteries ou des conduites souples.
